# EUROPÄISCHE PATENTSCHRIFT

(11) **EP 3 007 851 B1**
(45) Veröffentlichungstag und Bekanntmachung des Hinweises auf die Patenterteilung: **19.10.2016**
(21) Anmeldenummer: 14722178.2
(22) Anmeldetag: 05.05.2014
(51) Int. Cl.: B23K 26/08, B21D 22/02, B21D 22/20, B21D 24/16, B21D 26/02, B23K 26/38

(54) **VERFAHREN UND VORRICHTUNG ZUR HERSTELLUNG EINES BLECHFORMTEILS MIT EINEM STRAHLSCHNEIDVORRICHTUNG UND EINER UMFORMEINRICHTUNG**
METHOD OF AND APPARATUS FOR PRODUCING A SHAPED SHEET METAL PART WITH A BEAM CUTTING DEVICE AND A FORMING DEVICE
PROCÉDÉ ET DISPOSITIF DE FABRICATION D'UNE PIÈCE FORMÉE EN TÔLE AVEC UN DISPOSITIF DE COUPAGE PAR FAISCEAU ET UN DISPOSITIF DE FORMAGE

(30) Priorität: 11.06.2013 DE 102013210878
(43) Veröffentlichungstag der Anmeldung: 20.04.2016
(73) Patentinhaber: Schuler Automation GmbH & Co. KG, 91093 Hessdorf (DE)
(72) Erfinder: LIEBEL, Martin, 91236 Alfeld (DE); POHL, Thomas, 91091 Großenseebach (DE)
(74) Vertreter: Dr. Gassner & Partner mbB
(86) Internationale Anmeldenummer: PCT/EP2014/059111
(87) Internationale Veröffentlichungsnummer: WO 2014/198458

(56) Entgegenhaltungen:
- EP-A1- 0 646 428
- US-A- 4 859 828
- US-A1- 2006 118 529
- US-A1- 2010 122 970

## Beschreibung

Die Erfindung betrifft ein Verfahren und eine Vorrichtung zur Herstellung eines Blechformteils, beispielsweise eines Karosserieteils für ein Kraftfahrzeug gemäß dem Oberbegriff der Ansprüche 1 und 10 (siehe, z.B., EP0 646 428 A1).

Nach dem Stand der Technik ist beispielsweise aus der WO 2009/105608 A1 oder der EP 2 420 344 A1 eine Vorrichtung zum Schneiden von Platinen aus einem kontinuierlich durch eine Laserschneidanlage geführten Blechband bekannt. Die geschnittenen Platinen werden am Ende der Schneidlinie beispielsweise mittels eines Roboters aufgenommen und anschließend auf einen Wagen gestapelt. Sie werden dann mittels des Wagens zu einem Zwischenlager oder zu einer Umformeinrichtung, beispielsweise einer Presse, transportiert. Mittels der Presse werden aus den Platinen Blechformteile hergestellt.

Die WO 2010/144517 A2 offenbart ein Verfahren zur Herstellung eines Blechformteils, bei dem ein von einer Spule abgewickeltes Blechband abschnittsweise und taktweise einer Schneidpresse zugeführt wird. Mit der Schneidpresse werden taktweise Platinen aus dem Blechband geschnitten. Die Platinen werden mittels einer im Takt arbeitenden ersten Umsetzeinrichtung aufgenommen und einem Bearbeitungsapparat zugeführt. Bei dem Bearbeitungsapparat kann es sich um eine Presse handeln.

Die US 2010/0122970 A1 offenbart einen Schneidtisch mit einer Haltevorrichtung zum Halten eines darauf abgelegten Blechbandabschnitts. Die Haltevorrichtung ist gebildet aus in y-Richtung sich erstreckenden Haltemodulen, an denen Vakuumquellen oder Magnete angebracht sind. Mit den Haltemodulen wird ein auf dem Schneidtisch abgelegter Blechbandabschnitt während des Schneidvorgangs festgehalten. Aus dem Blechband geschnittene Platinen werden mittels einer ersten Umsetzeinrichtung aufgenommen und anschließend auf einer Palette gestapelt. Die mit den bekannten Vorrichtungen durchgeführten Verfahren zur Herstellung eines Blechformteils sind umständlich und zeitaufwändig.

Aufgabe der Erfindung ist es, die Nachteile nach dem Stand der Technik zu beseitigen. Es sollen insbesondere ein Verfahren und eine Vorrichtung angegeben werden, mit denen ein Blechformteil schnell und effizient hergestellt werden kann.

Diese Aufgabe wird durch die Merkmale der Ansprüche 1 und 10 gelöst. Zweckmäßige Ausgestaltungen der Erfindung ergeben sich aus den Merkmalen der Ansprüche 2 bis 9 und 11 bis 18.

Nach Maßgabe der Erfindung wird ein Verfahren zur Herstellung eines Blechformteils mit folgenden Schritten vorgeschlagen:
kontinuierliches Zuführen eines von einer Spule abgewickelten Blechbands zu einer Strahlschneidvorrichtung;
mitlaufendes Schneiden einer Platine aus dem mit einer konstanten Geschwindigkeit bewegten Blechband mittels der Strahlschneidvorrichtung, wobei eine Dauer zur Herstellung der Platine einen Takt definiert;

Aufnehmen der Platine mittels einer im Takt arbeitenden ersten Umsetzeinrichtung;

Weitergabe der Platine mittels der ersten Umsetzeinrichtung an eine im Takt arbeitende Umformeinrichtung; und

Umformen der Platine zum Blechformteil mittels der Umformeinrichtung.

Indem erfindungsgemäß die Platine mittels der ersten Umsetzeinrichtung an eine im Takt arbeitende Umformeinrichtung weitergegeben wird, kann vorteilhafterweise der Aufwand des Stapelns von Platinen auf Wägen, des Transports der Platinen mittels der Wägen zu einem Zwischenlager oder zu einer Umformeinrichtung sowie die erneute Aufnahme der Platinen zum Einsetzen in die Umformeinrichtung eingespart werden. Nach dem vorgeschlagenen Verfahren wird das Blechformteil in einer einzigen Linie ausgehend vom kontinuierlich bewegten Blechband hergestellt. Die erste Umsetzeinrichtung ist dabei so ausgebildet, dass damit die Platine mitlaufend erfasst und von einer Fördervorrichtung, beispielsweise zumindest einem Förderband, abgehoben und anschließend an die Umformeinrichtung weitergegeben wird. Damit kann die Dauer zur Herstellung eines Blechformteils erheblich verkürzt werden. Ferner kann mit dem erfindungsgemäßen Verfahren der logistische Aufwand bei der Herstellung eines Blechformteils erheblich vermindert werden.

Im Sinne der vorliegenden Erfindung ist der Begriff "Umformeinrichtung" allgemein zu verstehen. Sie kann neben einer eigentlichen Umformvorrichtung auch zusätzliche Bearbeitungseinrichtungen, beispielsweise eine der Umformvorrichtung stromaufwärts vorgeschaltete Entgratungseinrichtung, eine Beöleinrichtung, eine Reinigungseinrichtung, einen Ofen und/oder eine stromabwärts nachgeschaltete Qualitätsüberwachungseinrichtung umfassen.

Im Sinne der vorliegenden Erfindung wird unter dem Begriff "Blechformteil" ein Teil verstanden, welches ausgehend von einer mittels der Strahlschneidvorrichtung aus dem Blechband geschnittenen Platine zu einem Formteil mit einer dreidimensionalen Geometrie umgeformt wird. Bei dem Blech kann es sich beispielsweise um ein aus Stahl, Edelstahl, Aluminium oder Magnesium hergestelltes Blech handeln. Das Blech kann lackiert oder mit einem Korrosionsschutz versehen sein.

Das Blechband wird der Strahlschneidvorrichtung erfindungsgemäß kontinuierlich zugeführt. Die Platine wird während des Schneidvorgangs mit einer konstanten Geschwindigkeit durch die Strahlschneidvorrichtung bewegt. Damit wird die Geschwindigkeit zur Herstellung des Blechformteils erhöht.

Nach einer weiteren vorteilhaften Ausgestaltung wird mittels einer zweiten Umsetzeinrichtung zumindest ein durch das Schneiden der Platine gebildetes Reststück mitlaufend aufgenommen und auf einen ersten Stapelplatz gesetzt. Ein durch das Schneiden der Platine gebildetes Reststück kann auch mittels einer unterhalb einer durch einen Tisch der Strahlschneidvorrichtung definierten Schneidebene angeordneten Abführeinrichtung abgeführt werden. Die Abführeinrichtung kann einen Schrottschacht, ein Förderband, einen schienengebundenen Wagen, eine Schrottzerkleinerungsvorrichtung oder dgl. umfassen. - Anstelle des vorgenannten Reststücks kann auch eine weitere Platine aus dem Blechband geschnitten werden. Die weitere Platine kann eine von der ersten Platine abweichende Geometrie aufweisen, um die Materialausnutzung zu verbessern. Die weitere Platine kann mittels einer weiteren Umsetzeinrichtung an eine weitere Umformeinrichtung weitergegeben werden.

Die Platine kann mittels der ersten Umsetzeinrichtung gedreht und/oder gewendet werden. Sie kann insbesondere in eine zum Einlegen in die Umformeinrichtung geeignete Position bewegt werden. Zu diesem Zweck kann die erste Umsetzeinrichtung mit einer Kamera versehen sein. Mit den davon gelieferten Bildern ist es mittels eines geeigneten Bildauswertungsprogramms möglich, die genaue Position der an der ersten Umsetzeinrichtung anhaftenden Platine bzgl. der ersten Umsetzeinrichtung zu erfassen und damit exakt eine Ablageposition in der ersten Umformeinrichtung zu berechnen.

Nach einer weiteren Ausgestaltung der Erfindung wird die Platine mittels der ersten Umsetzeinrichtung in eine Umformvorrichtung der Umformeinrichtung oder auf einen Übergabeplatz gesetzt. Vom Übergabeplatz aus kann die Platine alternativ an eine von mehreren Umformvorrichtungen mittels einer von mehreren ersten Umsetzeinrichtungen transportiert werden. Die Platine kann auch mittels einer im Takt arbeitenden dritten Umsetzeinrichtung vom Übergabeplatz aufgenommen und in eine Umformvorrichtung der Umformeinrichtung gesetzt werden.

Nach einer weiteren Ausgestaltung ist vorgesehen, dass die Platine im Falle einer Störung der Umformeinrichtung mittels der ersten Umsetzeinrichtung auf einen zweiten Stapelplatz gesetzt wird. Dort können die Platinen solange gestapelt werden, bis die Störung der Umformeinrichtung behoben ist. Ferner kann die Platine im Falle einer Störung der Strahlschneidvorrichtung mittels der ersten oder dritten Umsetzeinrichtung vom zweiten Stapelplatz aufgenommen und an die Umformeinrichtung weitergegeben werden. Das erhöht weiter die Effizienz des erfindungsgemäßen Verfahrens.

Nach einer weiteren Ausgestaltung der Erfindung ist es auch möglich, dass die Platine mittels der ersten Umsetzeinrichtung an eine Transportvorrichtung zum Transport durch einen Ofen übergeben wird. Die erwärmte Platine kann stromabwärts des Ofens mittels einer im Takt arbeitenden vierten Umsetzeinrichtung aufgenommen und in eine Umformvorrichtung der Umformeinrichtung gesetzt werden. Das erfindungsgemäße Verfahren eignet sich also auch zur Herstellung von Blechformteilen mittels Warmumformung.

Eine durch ein Schneidprogramm zur Steuerung der Strahlschneidvorrichtung vorgegebene Platinengeometrie der Platine kann in Abhängigkeit einer Abweichung einer tatsächlichen Geometrie des Blechformteils von einer vorgegebenen Geometrie geändert werden. Zu diesem Zweck wird die Geometrie des Blechformteils nach seiner Herstellung beispielsweise mit einer Kamera erfasst. Mittels eines geeigneten Simulationsprogramms kann sodann ermittelt werden, wie eine ggf. festgestellte Abweichung der tatsächlichen Geometrie des Blechformteils von einer vorgegebenen Geometrie durch eine geeignete Änderung der Platinengeometrie vermieden werden kann. Es kann das Schneidprogramm zur Steuerung der Schneidvorrichtung entsprechend geändert werden. Das ermöglicht eine Herstellung von Blechformteilen mit einer besonders exakten Geometrie. Insbesondere kann dadurch - zumindest teilweise - auch auf einen Randbeschnitt der Blechformteile verzichtet werden.

Als Strahlschneidvorrichtung wird zweckmäßigerweise eine Laserschneidvorrichtung mit zumindest einem in xy-Richtung bewegbaren Laserschneidkopf verwendet.

Eine Platine wird vorteilhafterweise geschnitten, indem mittels unterschiedlicher Laserschneidköpfe Teilschnitte erzeugt werden. Zweckmäßigerweise umfasst die Laserschneidvorrichtung mehrere in xy-Richtung bewegbare Laserschneidköpfe, welche zweckmäßigerweise mit einem Faserlaser versehen sind.

Zum Schneiden einer Platine mit einer vorgegebenen Kontur aus einem kontinuierlich in einer Transportrichtung geförderten Blechband werden vorteilhafterweise folgende Schritte vorgeschlagen:
Bereitstellen einer Laserschneidvorrichtung mit zwei Laserschneidköpfen, welche jeweils sowohl in die Transportrichtung als auch in eine senkrecht dazu verlaufende y-Richtung bewegbar sind, und einer Steuereinrichtung zur Steuerung der Bewegung der Laserschneidköpfe gemäß einem Steuerprogramm zur Erzeugung der vorgegebenen Kontur, wobei ein erster Laserschneidkopf einen ersten Arbeitsbereich und ein zweiter Laserschneidkopf einen in Transportrichtung stromabwärts folgenden zweiten Arbeitsbereich aufweist,

Herstellen eines einen Endpunkt aufweisenden ersten Konturteilschnitts mittels eines vom ersten Laserschneidkopf erzeugten ersten Laserstrahls,

Bewegen eines den Endpunkt enthaltenden Abschnitts des Blechbands in den zweiten Arbeitsbereich,

Erfassen eines den Endpunkt enthaltenden Endabschnitts des ersten Konturteilschnitts mittels zumindest eines am zweiten Laserschneidkopf vorgesehenen optischen Sensors,

Bewegen des zweiten Laserschneidkopfs in Übereinstimmung mit dem Endabschnitt auf der Grundlage einer Auswertung der von dem zumindest einem optischen Sensor gelieferten Messwerte, und nachfolgend Erzeugen eines in den Endabschnitt des ersten Konturteilschnitts eingreifenden zweiten Laserstrahls und davon ausgehend Herstellen eines den ersten Konturteilschnitt fortsetzenden zweiten Konturteilschnitts oder

Bewegen eines vom zweiten Laserschneidkopf zur Herstellung eines zweiten Konturteilschnitts erzeugten zweiten Laserstrahls auf der Grundlage einer Auswertung der von dem zumindest einen optischen Sensor gelieferten Messwerte zum Endabschnitt, so dass der zweite Konturteilschnitt in den ersten Konturteilschnitt mündet.

Unter dem Begriff "optischer Sensor" wird allgemein ein Sensor verstanden, mit dem in der Umgebung des Laserschneidkopfs ein außerhalb, vorzugsweise ausschließlich außerhalb, eines aktuellen Schnittbereichs des Laserschneidkopfs befindlicher Schnitt in einem Blech erfasst werden kann. Die vom optischen Sensor gelieferten Messwerte werden von der Steuereinrichtung ausgewertet. Es wird eine Bewegung berechnet, so dass der Laserschneidkopf in Übereinstimmung mit dem Endabschnitt kommt und ein vom Laserschneidkopf erzeugter Laserstrahl in den Endabschnitt eingreift.

Mit dem Verfahren gelingt es, Platinen in weitgehend exakter Übereinstimmung mit einer vorgegebenen Kontur aus einem kontinuierlich geförderten Blechband herauszuschneiden. Die Kontur weist insbesondere auch in einem Übergabebereich, in welchem ein zweiter Konturteilschnitt sich an einen ersten Konturteilschnitt anschließt, den vorgegebenen Verlauf auf. Es ist nicht erforderlich, einen solchen Übergabebereich nach dem Herausschneiden der Platine aus dem Blechband nachzubearbeiten. Das spart Aufwand und Kosten.

Zweckmäßigerweise wird ein dem Blechband zugewandter Beobachtungsbereich in der Umgebung des zweiten Laserschneidkopfs mit zumindest einer nicht-kohärenten Lichtquelle beleuchtet. Es kann beobachtet werden, ob der zweite Laserstrahl exakt in den Endabschnitt des ersten Konturteilschnitts eingreift. Nötigenfalls kann die Schneidbewegung des zweiten Laserstrahls sofort korrigiert werden, so dass der zweite Laserstrahl in den Endabschnitt eingreift. Die Verwendung einer nicht-kohärenten Lichtquelle ermöglicht bei Einsatz geeigneter optischer Filter auch eine Beobachtung des Beobachtungsbereichs während des Schneidbetriebs.

Nach einer vorteilhaften Ausgestaltung der Erfindung sind am zweiten Laserschneidkopf zwei optische Sensoren in einander gegenüberliegender Anordnung vorgesehen. Damit ist es möglich, unabhängig von der jeweiligen Bewegungsrichtung des zweiten Laserschneidkopfs einen Bereich zu beobachten, welcher einem durch den zweiten Laserstrahl erzeugten Schnitt in Schnittrichtung vorauseilt. Dabei weisen die einander gegenüberliegend angeordneten optischen Sensoren zweckmäßigerweise einen Beobachtungsbereich jeweils von 180° auf.

Nach einer weiteren vorteilhaften Ausgestaltung ist es auch möglich, eine Umgebung des zweiten Laserschneidkopfs mit mehreren, teilweise überdeckende Beobachtungsbereiche aufweisenden optischen Sensoren zu beobachten. Zur Beobachtung der Umgebung des zweiten Laserschneidkopfs können beispielsweise drei oder vier optische Sensoren vorgesehen sein, welche so am zweiten Laserschneidkopf angebracht sind, dass damit der gesamte Bereich in der Umgebung des gegenüberliegend des zweiten Laserschneidkopfs befindlichen Blechbands beobachtet werden kann.

Der optische Sensor kann auch einen Lichtschnittsensor umfassen. Mit einem Lichtschnittsensor bzw. einem Lasertriangulationssensor ist es möglich, entlang einer Linie ein Höhenprofil zu ermitteln. Mit dem Höhenprofil kann ein im Blechband erzeugter Schnitt erkannt werden. Ein Lichtschnittsensor umfasst einen Linienprojektor, welcher als Lichtquelle mit einem Laser versehen ist. Mit dem Linienprojektor wird eine schmale und helle Linie auf dem Blechband projiziert. Ferner umfasst der Lichtschnittsensor eine ortsauflösende Fotodiode, eine CCD-Zeile oder eine CCD-Kamera, mit welcher die Projektion der Linie auf dem Blechband beobachtet wird. Aus der Verschiebung der beobachteten Linie kann ein Höhenprofil abgeleitet und damit ein Schnitt im Blechband erkannt werden.

Bei dem optischen Sensor kann es sich auch um eine Kamera, vorzugsweise eine CCD-Kamera, handeln, wie sie herkömmlich in einer Vielzahl von Geräten, beispielsweise Smartphone-Kameras oder dgl., Verwendung findet.

Nach einer besonders vorteilhaften Ausgestaltung der Erfindung wird bei der Bewegung des Blechbands in Transportrichtung ständig eine Abweichung einer Lage des Blechbands in y-Richtung erfasst und daraus eine korrigierte y-Position für den zweiten Arbeitsbereich berechnet. Zur Messung der Abweichung der Lage des Blechbands in y-Richtung von einer Soll-Lage kann beispielsweise ein Bandkantensensor oder ein Sensor zur Erfassung einer Bandmittenlage vorgesehen sein. Derartige Sensoren sind herkömmlich verfügbar. Wenn das Blechband von der Soll-Lage in y-Richtung abweicht, kann ein Schneidprogramm zur Herstellung des ersten Konturteilschnitts ständig entsprechend korrigiert werden. Infolgedessen kann es sein, dass eine y-Position eines Endpunkts des im ersten Arbeitsbereich hergestellten ersten Konturteilschnitts von seiner durch das Schneidprogramm vorgegebenen y-Soll-Position abweicht. Mit der vorgeschlagenen Erfassung der Abweichung der Lage des Blechbands in y-Richtung ist es möglich, die Berechnung der Bewegung des zweiten Laserschneidkopfs zum Endabschnitt auf der Grundlage einer korrigierten y-Position durchzuführen. Das macht das vorgeschlagene Verfahren störunanfällig und robust.

Nach einer weiteren vorteilhaften Ausgestaltung wird vor dem Eintritt des Endpunkts in den zweiten Arbeitsbereich der zweite Laserschneidkopf in Richtung der y-Position oder der korrigierten y-Position bewegt. Infolgedessen befindet sich der zweite Laserschneidkopf bereits beim Eintritt des Endpunkts in den zweiten Arbeitsbereich in dessen Nähe. So kann weiter Zeit zur Erfassung des Endabschnitts und zur Durchführung der Bewegung des zweiten Laserschneidkopfs zum Endabschnitt gewonnen werden. Das ermöglicht eine Durchführung des Verfahrens selbst bei relativ hohen Transportgeschwindigkeiten des Blechbands in Transportrichtung.

Als Umsetzeinrichtung/en wird/werden zweckmäßigerweise Roboter, vorzugsweise 5- oder 6-Achs-Roboter, verwendet. Roboter ermöglichen ein mitlaufendes Aufnehmen der Platinen sowie ein Umsetzen derselben in einem vorgegebenen Takt. Damit können die Platinen ferner gemäß einer vorgegebenen Programmsteuerung gedreht und/oder gewendet und in eine beliebige geeignete Position gebracht werden, so dass sie exakt in die Form einer Umformvorrichtung eingelegt werden können.

Als Umformvorrichtung kann zumindest eine Presse, zumindest eine Warmformpresse oder eine Hydroformvorrichtung verwendet werden. Die Umformvorrichtung kann auch eine aus mehreren hintereinander geschalteten Pressen gebildete Pressenstraße sein.

Nach weiterer Maßgabe der Erfindung wird eine Vorrichtung zur Herstellung eines Blechformteils vorgeschlagen, umfassend:
eine Zuführvorrichtung zum Zuführen eines von einer Spule abgewickelten Blechbands zu einer Strahlschneidvorrichtung;
eine Strahlschneidvorrichtung zum Schneiden einer Platine aus dem Blechband, wobei eine Dauer zur Herstellung der Platine einen Takt definiert;
eine im Takt arbeitende erste Umsetzeinrichtung zum Aufnehmen und Weitergeben der Platine an eine im Takt arbeitende Umformeinrichtung; und
eine im Takt arbeitende Umformeinrichtung zum Umformen der Platine zum Blechformteil.

Bei der erfindungsgemäßen Vorrichtung werden die Strahlschneidvorrichtung, die erste Umsetzeinrichtung sowie die Umformeinrichtung im selben Takt betrieben. Dazu ist eine Steuerung vorgesehen, mit der die Zuführvorrichtung, die Strahlschneidvorrichtung, die erste Umsetzeinrichtung sowie die Umformeinrichtung gemeinsam gesteuert werden. Mit der Steuerung werden insbesondere die Transportgeschwindigkeit des Blechbands durch die Strahlschneidvorrichtung sowie die Umsetzgeschwindigkeit der ersten Umsetzeinrichtung aufeinander abgestimmt. Desgleichen wird die Umformgeschwindigkeit der Umformeinrichtung auf die Umsetzgeschwindigkeit der ersten Umsetzeinrichtung abgestimmt. Bei der Steuerung kann es sich um eine prozessrechnergestützte Steuerung mit einem entsprechenden Steuerprogramm handeln.

Die erste Umsetzeinrichtung ist vorteilhafterweise so ausgestaltet, dass die beispielsweise mittels zumindest eines Förderbands in der Transportrichtung transportierten Platinen mitlaufend erfasst und anschließend von der Fördervorrichtung abgehoben werden. Zu diesem Zweck wird eine Erfassungseinrichtung der ersten Umsetzeinrichtung, beispielsweise ein Roboterarm, zunächst auf eine Geschwindigkeit beschleunigt, welche der Transportgeschwindigkeit der Platine entspricht. Anschließend wird mittels der Erfassungseinrichtung die Platine erfasst und von der Fördervorrichtung abgehoben. Bei der Erfassungseinrichtung kann es sich um eine Magneterfassungseinrichtung oder eine mittels Unterdruck arbeitende Erfassungseinrichtung handeln.

Nach einer vorteilhaften Ausgestaltung der Erfindung umfasst die Zuführvorrichtung eine Walzenrichtmaschine. Damit kann das Blechband gerichtet und gleichzeitig mit einer vorgegebenen Transportgeschwindigkeit der Strahlschneidvorrichtung zugeführt werden.

Nach einer weiteren Ausgestaltung der Erfindung umfasst die Laserschneidvorrichtung zwei Laserschneidköpfe, welche jeweils sowohl in die Transportrichtung als auch in eine senkrecht dazu verlaufende y-Richtung bewegbar sind, und eine Steuereinrichtung zur Steuerung der Bewegung der Laserschneidköpfe gemäß einem Steuerprogramm zur Erzeugung der vorgegebenen Kontur, wobei ein erster Laserschneidkopf einen ersten Arbeitsbereich und ein zweiter Laserschneidkopf einen in Transportrichtung stromabwärts folgenden zweiten Arbeitsbereich aufweist, wobei zumindest am zweiten Laserschneidkopf zumindest ein optischer Sensor vorgesehen ist und wobei des Weiteren eine Auswerteeinrichtung zum Auswerten der von dem zumindest einen optischen Sensor gelieferten Messwerte vorgesehen ist, so dass der zweite Laserschneidkopf auf der Grundlage der Auswertung in Übereinstimmung mit dem Endabschnitt bewegbar ist. - Es ist damit möglich, Platinen aus mehreren Konturteilschnitten exakt herzustellen.

Vorteilhafterweise sind am zweiten Laserschneidkopf zwei optische Sensoren in einander gegenüberliegender Anordnung vorgesehen. Die optischen Sensoren können zumindest teilweise überdeckende Beobachtungsbereiche aufweisen. Der zumindest eine optische Sensor kann eine Kamera oder einen Lichtschnittsensor umfassen. Der optische Sensor ist zweckmäßigerweise so ausgestaltet, dass damit lediglich ein Bereich außerhalb eines aktuellen Schnittbereichs des Laserschneidkopfs beobachtet wird. Das vereinfacht die Erfassung geeigneter Daten oder Bilder zur Ermittlung der Lage des Endabschnitts.

Nach einer weiteren vorteilhaften Ausgestaltung umfasst die erfindungsgemäße Vorrichtung eine Abweichungserfassungseinrichtung zur Erfassung einer Abweichung einer Lage des Blechbands in y-Richtung und zur Berechnung einer korrigierten y-Position für den zweiten Arbeitsbereich. Eine solche Abweichungserfassungseinrichtung kann Sensoren zur Erfassung einer Randlage des Blechbands bezüglich der Vorrichtung umfassen. Die vorgeschlagene Abweichungserfassungseinrichtung ermöglicht ein besonders schnelles und exaktes Herstellen einer Platine mit einer vorgegebenen Kontur.

Wegen der weiteren Ausgestaltungsmerkmale der Vorrichtung wird auf die Beschreibung der vorangegangenen Merkmale zum Verfahren verwiesen. Die dort beschriebenen Funktionalitäten können durch entsprechende Vorrichtungsmerkmale verkörpert sein.

Nachfolgend wird die Erfindung anhand von Ausführungsbeispielen näher erläutert. Es zeigen:
- Fig. 1: eine schematische Draufsicht auf eine erste Vorrichtung,
- Fig. 2: eine schematische Draufsicht auf eine zweite Vorrichtung,
- Fig. 3: eine schematische Draufsicht auf eine dritte Vorrichtung,
- Fig. 4: eine schematische Draufsicht auf ein Blechband mit einer daraus auszuschneidenden Platine,
- Fig. 5: eine schematische Draufsicht auf das Blechband sowie Arbeitsbereiche von Laserschneidköpfen einer Laserschneideinrichtung,
- Fig. 6: schematisch das Erfassen des Endpunkts mittels eines zweiten Laserschneidkopfs,
- Fig. 7: schematisch das Erfassen eines Endpunkts mittels eines weiteren zweiten Laserschneidkopfs und
- Fig. 8a - h: Schritte zur Herstellung eines zweiten Konturteilschnitts.

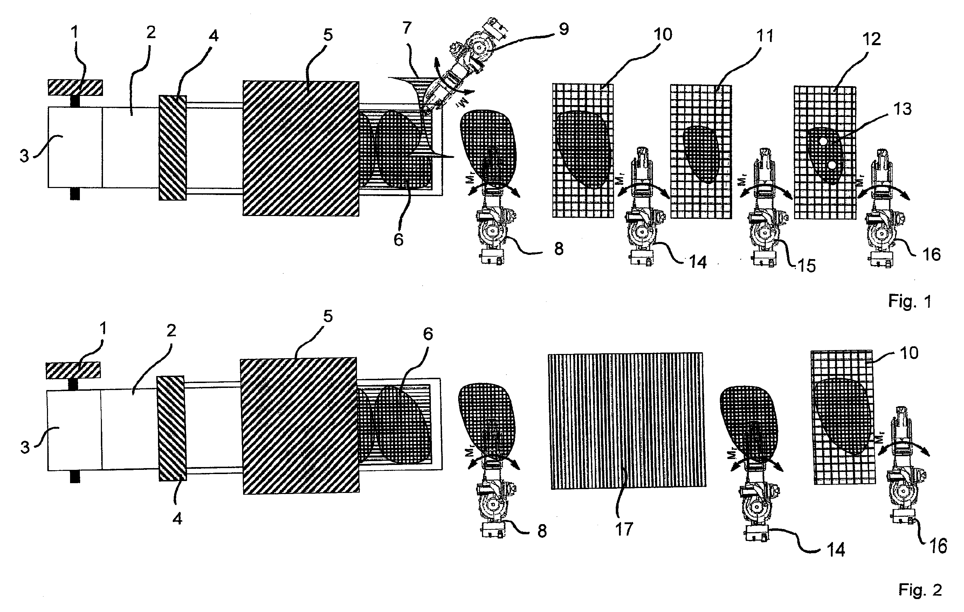

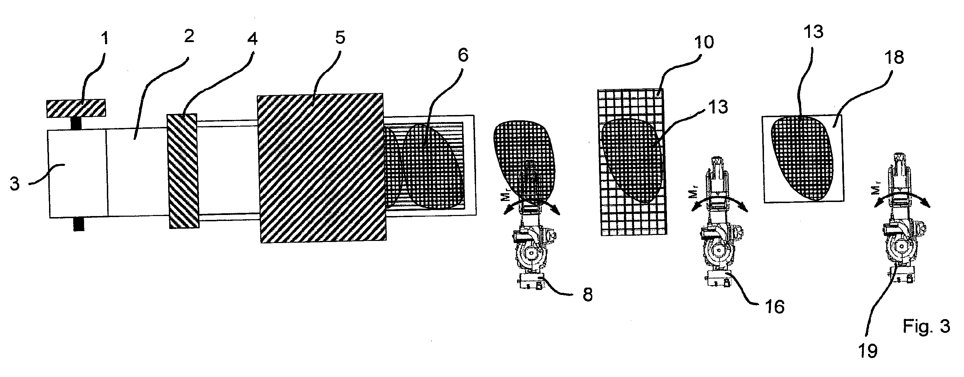

In den Fig. 1 bis 3 ist auf einer Haspel 1 eine aus einem Blechband 2 gebildete Spule 3 aufgenommen. Mit dem Bezugszeichen 4 ist eine Walzenrichtmaschine bezeichnet, welcher stromabwärts eine Laserschneidvorrichtung 5 nachgeordnet ist. Mit dem Bezugszeichen 6 ist eine Platine bezeichnet. Ein beim Herstellen der Platine 6 gebildetes Reststück ist mit dem Bezugszeichen 7 bezeichnet. In den Fig. 2 und 3 ist das Reststück der Klarheit halber weggelassen.

In Fig. 1 sind stromabwärts der Laserschneidvorrichtung 5 ein erster Roboter 8 und ein zweiter Roboter 9 vorgesehen. Der erste Roboter 8 dient zum Umsetzen der Platine 6 an eine stromabwärts vorgesehene erste Presse 10. Der zweite Roboter 9 dient dem Abführen des Reststücks 7 an eine hier nicht näher gezeigte Abführeinrichtung oder zum Setzen des Reststücks 7 auf einen hier nicht näher gezeigten ersten Stapelplatz. Stromabwärts der ersten Presse 10 sind eine zweite 11 und eine dritte Presse 12 vorgesehen. Zum Umsetzen der damit hergestellten Blechformteile 13 sind ein dritter 14 und ein vierter Roboter 15 vorgesehen. Ein fünfter Roboter 16 dient der Übergabe des Blechformteils 13 an eine hier nicht näher gezeigte Aufnahmeeinrichtung zur Aufnahme der Blechformteile 13.

Die Funktion der ersten Vorrichtung ist Folgende:
Mittels der Walzenrichtmaschine 4 wird ein von der Spule 3 abgewickeltes Blechband 2 kontinuierlich, gemäß der Erfindung, der Laserschneidvorrichtung 5 zugeführt. Die Laserschneidvorrichtung 5 kann mehrere in xy-Richtung bewegbare Laserschneidköpfe umfassen, welche mittels einer prozessrechnergestützten Steuerung zum Ausschneiden der Platinen 6 mit einer vorgegebenen Geometrie bewegbar sind. Die ausgeschnittenen Platinen 6 werden stromabwärts der Laserschneidvorrichtung 5 von einem ersten Roboter 8 aufgenommen und damit einer weiter stromabwärts vorgesehenen ersten Presse 10 zugeführt. Reststücke 7 werden stromabwärts der Laserschneidvorrichtung 5 mittels des zweiten Roboters 9 aufgenommen und beispielsweise auf einen ersten Stapelplatz gesetzt, von dem sie nachfolgend abtransportiert werden.

Mittels eines dritten Roboters 14 wird eine Vorform des Blechformteils 13 von der ersten Presse 10 an die zweite Presse 11 übergeben. Mittels der zweiten Presse 11 wird eine weitere Vorform des Blechformteils 13 hergestellt. Die weitere Vorform wird mittels eines vierten Roboters 15 an die dritte Presse 12 übergeben. Mittels der dritten Presse 12 wird schließlich das Blechformteil 13 hergestellt. Das Blechformteil 13 wird mittels eines fünften Roboters 16 entnommen und an eine (hier nicht näher gezeigte) Aufnahmeeinrichtung übergeben. Bei der Aufnahmeeinrichtung kann es sich um einen Behälter oder dgl. handeln.

Die Roboter 8, 9, 14, 15, 16 weisen zum Aufnehmen der Platinen 6 zweckmäßigerweise eine Unterdruckvorrichtung, einen Elektromagneten oder dgl. auf. Zur exakten Positionierung der Platine 6 bei der Weitergabe an die Umformeinrichtung können optische Sensoren, beispielsweise Lichtschnittsensoren, Kameras oder dgl., vorgesehen sein. Ferner ist es auch möglich, induktive oder mechanische Sensoren vorzusehen. Zur Gewährleistung einer exakten Positionierung der Platine 6 in einer Umformvorrichtung der Umformeinrichtung können Anschläge oder in die Platine 6 eingreifende Zentrierbolzen vorgesehen sein.

Eine durch die Walzenrichtmaschine 4 erzeugte Vorschubgeschwindigkeit des Blechbands 2, die Bewegungsabläufe der Laserschneidköpfe in der Laserschneidvorrichtung 5 sowie die Bewegungsabläufe der Roboter 8, 9, 14, 15, 16 und der Pressen 10, 11, 12 werden mittels einer hier nicht näher gezeigten Steuerung gesteuert. Mit der Steuerung werden insbesondere die Bewegungsabläufe der Roboter 8, 9, 14, 15, 16 in Abhängigkeit der Vorschubgeschwindigkeit des Blechbands 2 gesteuert. Ferner werden auch die Bewegungsabläufe der Pressen 10, 11, 12 in Abhängigkeit der Vorschubgeschwindigkeit des Blechbands 2 gesteuert. Zur Ermittlung der Vorschubgeschwindigkeit des Blechbands 2 ist zweckmäßigerweise ein Sensor vorgesehen. Der Sensor ist zweckmäßigerweise zwischen der Walzenrichtmaschine 4 und der Laserschneidvorrichtung 5 angeordnet. Es handelt sich dabei zweckmäßigerweise um eine Weglängenmesseinrichtung, welche beispielsweise ein reibschlüssig an das Blechband 2 anliegendes Rad umfasst. Aus der Änderung des Winkels des Rads kann auf den zurückgelegten Weg des Blechbands 2 geschlossen werden. Aus dem zurückgelegten Weg kann auf die Geschwindigkeit des Blechbands 2 geschlossen werden.

Ein Steuerprogramm der Steuerung kann mehrere Sicherheitsroutinen umfassen. Nach einer ersten Sicherheitsroutine ist im Falle einer Störung einer der Pressen 10, 11, 12 oder einer der Roboter 14, 15, 16 vorgesehen, dass mittels des ersten Roboters 8 die Platinen 6 auf einen zweiten Stapelplatz (hier nicht gezeigt) gestapelt werden, welcher sich vorzugsweise außerhalb des Transportwegs des Blechbands 2 bzw. der daraus hergestellten Platinen 6 befindet.

In ähnlicher Weise können nach einer weiteren Sicherheitsroutine im Falle eines Ausfalls, beispielsweise der Laserschneidvorrichtung 5, mittels des ersten Roboters 8 die Platinen 6 vom zweiten Stapelplatz aufgenommen und der durch die Pressen 10, 11, 12 sowie die Roboter 14, 15, 16 gebildeten Pressenstraße taktweise zugeführt werden.

Fig. 2 zeigt eine zweite erfindungsgemäße Vorrichtung. Dabei wird die Platine 6 mittels des ersten Roboters 8 an eine Transportvorrichtung (hier nicht gezeigt) zum Transport der Platine 6 durch einen Ofen 17 gesetzt. Mittels des zweiten Roboters 9 wird die im Ofen 17 erwärmte Platine 6 der ersten Presse 10 zugeführt. Bei der ersten Presse 10 handelt es sich in diesem Fall um eine Warmformpresse.

Fig. 3 zeigt eine Draufsicht auf eine dritte Vorrichtung. Dabei wird die Platine 6 taktweise mittels des ersten Roboters 8 an die erste Presse 10 übergeben. Ein mittels der ersten Presse 10 hergestelltes Blechformteil 13 wird sodann mittels des fünften Roboters 16 an eine mit dem Bezugszeichen 18 bezeichnete Prüfeinrichtung übergeben. Unter Verwendung der Prüfeinrichtung 18 kann folgendes Verfahren durchgeführt werden:
Die Prüfeinrichtung 18 kann beispielsweise eine Kamera umfassen. Ein mit der Kamera aufgenommenes Bild des Blechformteils 13 kann mittels eines Bildauswertungsprogramms ausgewertet werden. Es kann insbesondere festgestellt werden, ob und ggf. in welchem Umfang die tatsächliche Geometrie des Blechformteils 13 von einer vorgegebenen Geometrie abweicht.

Im Falle einer Abweichung kann durch eine "Rückwärtssimulation" des Umformvorgangs rechnerisch rückgängig gemacht werden. Infolgedessen kann nachfolgend durch eine Änderung der Schneidkontur der Platine 6 eine Abweichung der tatsächlichen Geometrie von der vorgegebenen Geometrie kompensiert werden. - Zur Kompensation der Abweichung kann aber auch die Schneidkontur manuell anders eingestellt werden. Es kann auch ein einfacher Algorithmus vorgesehen sein, mit dem die Schneidkontur in Abhängigkeit der Abweichung zu deren Kompensation geändert wird.

Eine Änderung der Schneidkontur kann beispielsweise im Falle von Dickenfluktuationen des Blechbands 2 erforderlich sein. Durch die vorgeschlagene Änderung der Schneidkontur ist es möglich, Blechformteile 13 mit einer besonders exakten geometrischen Ausgestaltung herzustellen. Es kann u. U. ein nach dem Stand der Technik erforderlicher Randbeschnitt der Blechformteile entfallen.

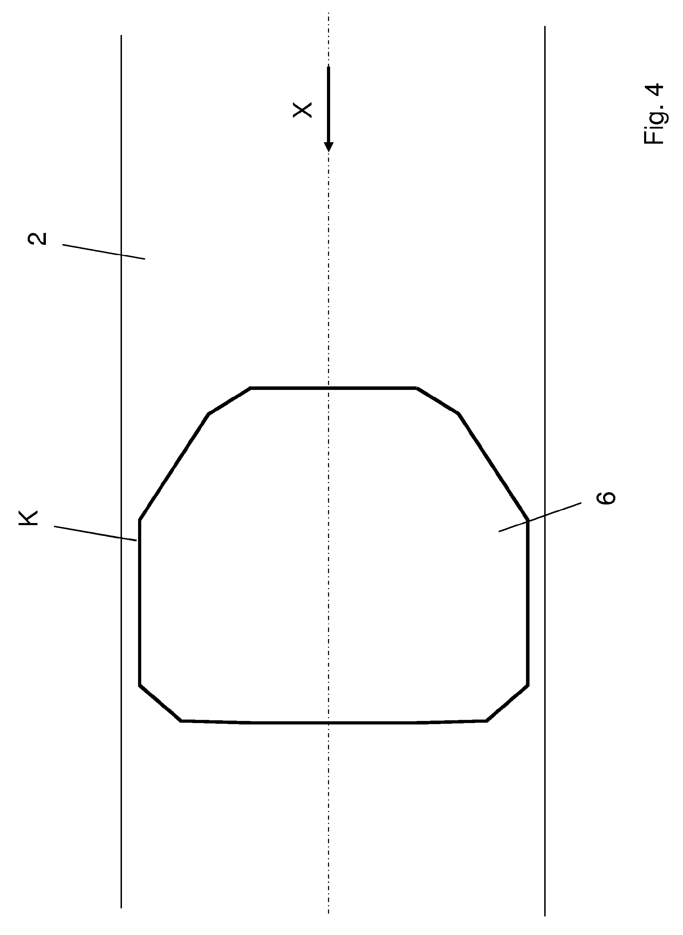

Fig. 4 zeigt schematisch eine Draufsicht auf ein Blechband 2. Mit dem Bezugszeichen K ist eine Kontur einer Platine 6 bezeichnet. Mit dem Bezugszeichen x ist eine Transportrichtung des Blechbands 2 bezeichnet. Zum Transport in die Transportrichtung x wird das Blechband 2 mittels einer Transporteinrichtung (hier nicht gezeigt) kontinuierlich bewegt. Bei der Transporteinrichtung kann es sich beispielsweise um eine Walzenrichtmaschine, ein Transportband oder dgl. handeln.

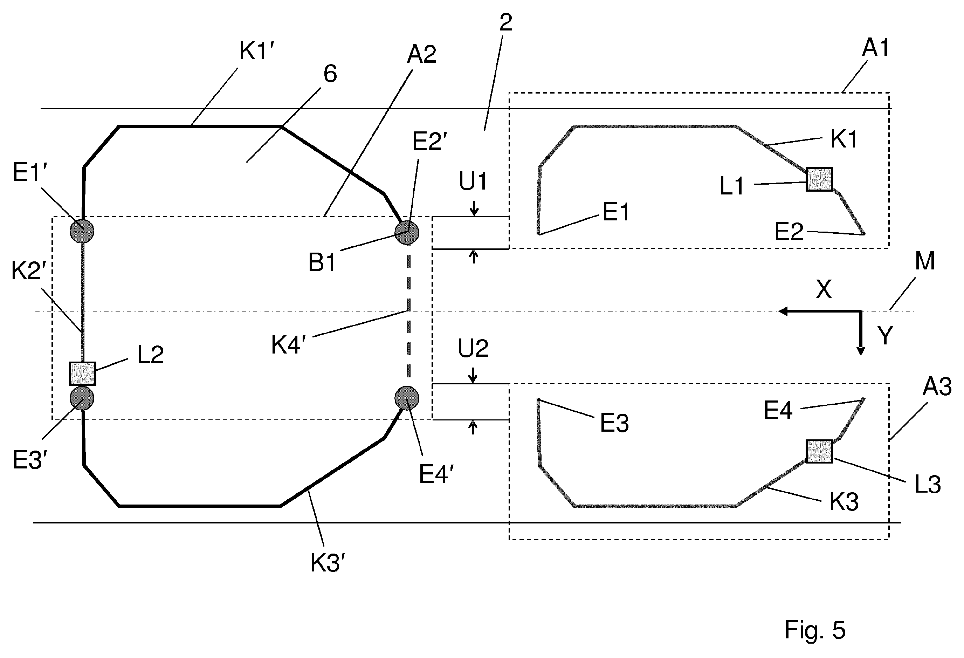

Fig. 5 zeigt schematisch eine Draufsicht auf das Blechband 2 mit darüber in Arbeitsbereichen bewegbaren Laserschneidköpfen. Mit dem Bezugszeichen L1 ist ein erster Laserschneidkopf bezeichnet, welcher in einem ersten Arbeitsbereich A1 sowohl in Transportrichtung x als auch in einer senkrecht dazu verlaufenden y-Richtung bewegbar ist. Zu diesem Zweck kann der erste Laserschneidkopf L1 auf einem (hier nicht gezeigten) ersten Schlitten angebracht sein, welcher mitlaufend in Transportrichtung x bewegt werden kann. Der erste Schlitten weist eine den ersten Arbeitsbereich A1 in seiner in y-Richtung sich erstreckenden Breite überspannende Brücke mit einem zweiten Schlitten (hier nicht gezeigt) auf, an dem der erste Laserschneidkopf L1 in y-Richtung bewegbar angebracht ist.

In Transportrichtung x stromabwärts des ersten Arbeitsbereichs A1 befindet sich ein zweiter Arbeitsbereich A2 eines zweiten Laserschneidkopfs L2. Der zweite Laserschneidkopf L2 ist im zweiten Arbeitsbereich A2 in x- und y-Richtung frei bewegbar. Er kann dazu - ähnlich wie der erste Laserschneidkopf L1 - auf einem (hier nicht gezeigten) weiteren ersten Schlitten angebracht sein, welcher mitlaufend in Transportrichtung x bewegbar ist und eine den zweiten Arbeitsbereich A2 überspannende Brücke aufweist, an welcher der zweite Laserschneidkopf L2 in y-Richtung bewegbar an einem weiteren zweiten Schlitten (hier nicht gezeigt) angebracht ist. - Der erste Arbeitsbereich A1 und der zweite Arbeitsbereich A2 weisen in y-Richtung eine erste Überlappung U1 auf. Der erste A1 und der zweite Arbeitsbereich A2 können auch in x-Richtung überlappen.

Mit dem Bezugszeichen M ist eine Mittellinie der Laserschneidvorrichtung bezeichnet. Die Laserschneidvorrichtung umfasst einen dritten Laserschneidkopf L3, dessen dritter Arbeitsbereich A3 bezüglich der Mittellinie M symmetrisch zum ersten Arbeitsbereich A1 des ersten Laserschneidkopfs L1 angeordnet ist. D. h. der dritte Arbeitsbereich A3 befindet sich stromaufwärts des zweiten Arbeitsbereichs A2. Er weist - ähnlich wie der erste Arbeitsbereich A1 - mit dem zweiten Arbeitsbereich A2 in y-Richtung eine Überlappung U2 auf. Der dritte Arbeitsbereich A3 und der zweite Arbeitsbereich A2 können auch in x-Richtung überlappen.

Zur Herstellung der Platine 6 wird mit dem ersten Laserschneidkopf L1 der erste Konturteilschnitt K1 hergestellt. Simultan dazu kann mit dem dritten Laserschneidkopf L3 ein dritter Konturteilschnitt K3 hergestellt werden. Der erste Konturteilschnitt K1 weist einen ersten Endpunkt E1 und einen zweiten Endpunkt E2 auf. Der dritte Konturteilschnitt K3 weist einen dritten Endpunkt E3 und einen vierten Endpunkt E4 auf. Die entsprechenden Endpunkte eines zuvor hergestellten ersten Konturteilschnitts K1' sind mit E1' und E2' bezeichnet. Die Endpunkte eines zuvor hergestellten dritten Konturteilschnitts K3' sind mit E3' und E4' bezeichnet.

In Fig. 5 ist mit dem Bezugszeichen K2' ein zweiter Konturteilschnitt und mit dem Bezugszeichen K4' ein vierter Konturteilschnitt bezeichnet, welche die bereits hergestellten ersten K1' und dritten Konturteilschnitte K3' verbinden sollen. Mit dem Bezugszeichen B1 ist ein erster Übergabebereich bezeichnet, welcher sich im zweiten Arbeitsbereich A2 befindet und wie die Arbeitsbereiche A1, A2, A3 stationär ist.

Bedingt durch die erfingdungsgemäß kontinuierliche Bewegung des Blechbands 2 in x-Richtung werden der erste Konturteilschnitt K1 und ggf. der dritte Konturteilschnitt K3 aus dem ersten Arbeitsbereich A1 sowie ggf. dem dritten Arbeitsbereich A3 in den zweiten Arbeitsbereich A2 bewegt. Sobald das erste Ende E1 in den zweiten Arbeitsbereich A2 eingetreten ist, wird der zweite Laserschneidkopf L2 in den ersten Übergabebereich B1 bewegt. Der zweite Laserschneidkopf L2 beginnt - nach Erfassung des Endabschnitts mittels des optischen Sensors - damit, den zweiten Konturteilschnitt K2 herzustellen. Fig. 5 zeigt die Situation kurz vor Beendigung des zweiten Konturteilschnitts K2. Unmittelbar nach Beendigung des zweiten Konturteilschnitts K2 wird der zweite Laserschneidkopf L2 wieder in den ersten Übergabebereich B1 verfahren, um dann den mit der unterbrochenen Linie angedeuteten vierten Konturteilschnitt K4 herzustellen.

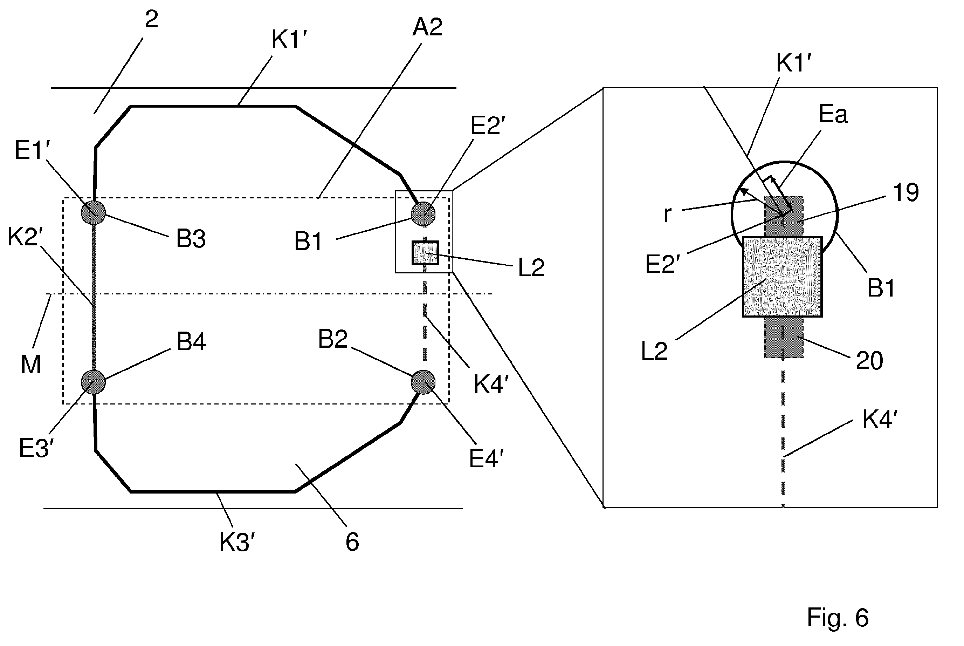

Fig. 6 zeigt schematisch die Situation beim Eintritt des zweiten Endpunkts E2 in den zweiten Arbeitsbereich A2. Der zweite Endpunkt E2 wird im zweiten Arbeitsbereich A2 mit E2' bezeichnet. Am zweiten Laserschneidkopf L2 sind eine erste Kamera 19 und eine zweite Kamera 20 angebracht. Die erste 19 und die zweite Kamera 20 sind jeweils so ausgestaltet, dass damit zumindest die Fläche eines Übergabebereichs B1, B2, B3, B4 beobachtet werden kann. Ein Beobachtungsradius r der ersten 19 oder der zweiten Kamera 20 beträgt zumindest 20 mm, vorzugsweise 25 bis 50 mm. Ein aktueller Schnittbereich des zweite Laserschneidkopfs L2 liegt hier außerhalb des Beobachtungsradius r.

Sobald der zweite Endpunkt E2' in den zweiten Arbeitsbereich A2 eintritt, wird der zweite Laserschneidkopf L2 in den ersten Übergabebereich B1 bewegt. Mittels der ersten Kamera 19 wird der zweite Endpunkt E2' erfasst, welcher sich am Ende eines mit dem Bezugszeichen Ea bezeichneten Endabschnitts des ersten Konturteilschnitts K1' befindet. Auf der Grundlage des von der ersten Kamera 19 gelieferten Bilds sowie der bekannten Ortskoordinaten des zweiten Laserschneidkopfs L2 kann mit der Steuereinrichtung unter Beachtung der Bewegungsgeschwindigkeit des Blechbands 2 in Transportrichtung x für den zweiten Laserschneidkopf L2 eine Bewegung berechnet werden, so dass der zweite Laserschneidkopf L2 in Übereinstimmung mit den Endabschnitt Ea bewegt, der nachfolgend erzeugte zweite Laserstrahl (hier nicht gezeigt) exakt in den Endabschnitt Ea eingreift und dann der vierte Konturteilschnitt K4' hergestellt wird.

Am Ende des vierte Konturteilschnitts K4' erfasst die zweite Kamera 20 in einem zweiten Übergabebereich B2 den vierten Endpunkt E4'. Mittels der Steuereinrichtung kann die Bewegung des zweiten Laserschneidkopfs L2 so gesteuert werden, dass der vierte Konturteilschnitt K4' exakt am vierten Ende E4' endet. Während der Herstellung des vierten Konturteilschnitts K4' wird der zweite Laserschneidkopf L2 mitlaufend mit der Bewegung des Blechbands 2 in x-Richtung bewegt und gelangt an das stromabwärtige Ende des zweiten Arbeitsbereichs A2. Sobald der vierte Konturteilschnitt K4 vollständig hergestellt worden ist, wird der zweite Laserschneidkopf L2 wieder zurück in Richtung des ersten Übergabebereichs B1 bewegt, um sodann einen sich an einem ersten Endpunkt E1' anschließenden zweiten Konturteilschnitt K2' herzustellen.

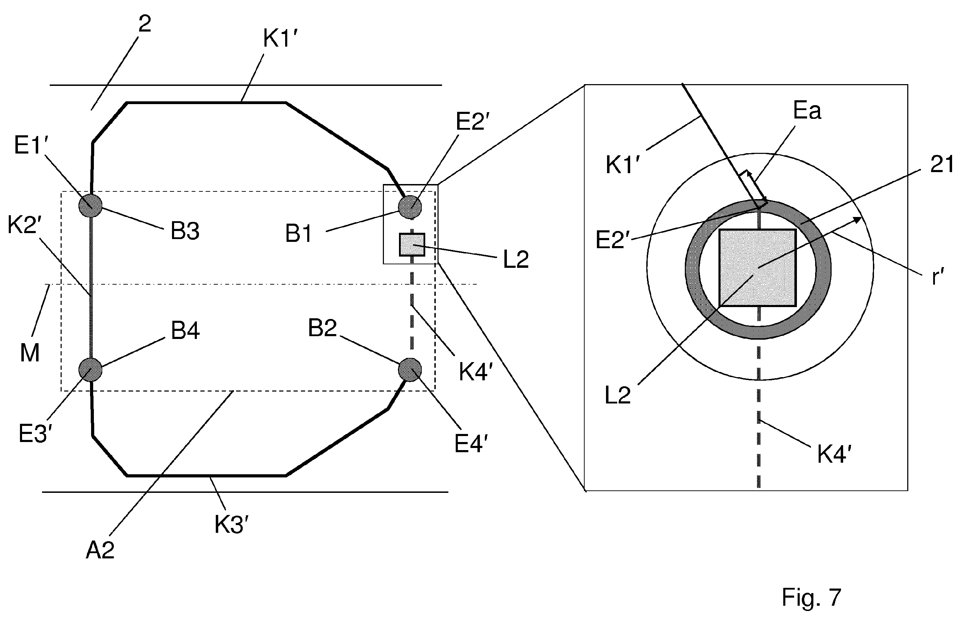

Fig. 7 zeigt ein weiteres Beispiel eines Verfahrens zum Auffinden eines Endabschnitts Ea des ersten Konturteilschnitts K1'. Dabei ist der zweite Laserschneidkopf L2 mit einer dritten Kamera 21 versehen, welche eine Ringoptik aufweist. Die Ringoptik umgibt einen aus dem zweiten Laserschneidkopf L2 austretenden zweiten Laserstrahl (hier nicht gezeigt) konzentrisch. Ein Beobachtungsfeld der dritten Kamera 21 ist konzentrisch mit dem zweiten Laserstrahl. Ein weiterer Beobachtungsradius der dritten Kamera 21 ist mit dem Bezugszeichen r' bezeichnet.

Die Verwendung einer dritten Kamera 21 mit einem konzentrischen Beobachtungsfeld hat den Vorteil, dass damit zeitgleich Endpunkte erfasst werden können, welche sich in der gesamten Umgebung des zweiten Laserschneidkopfs L2 befinden.

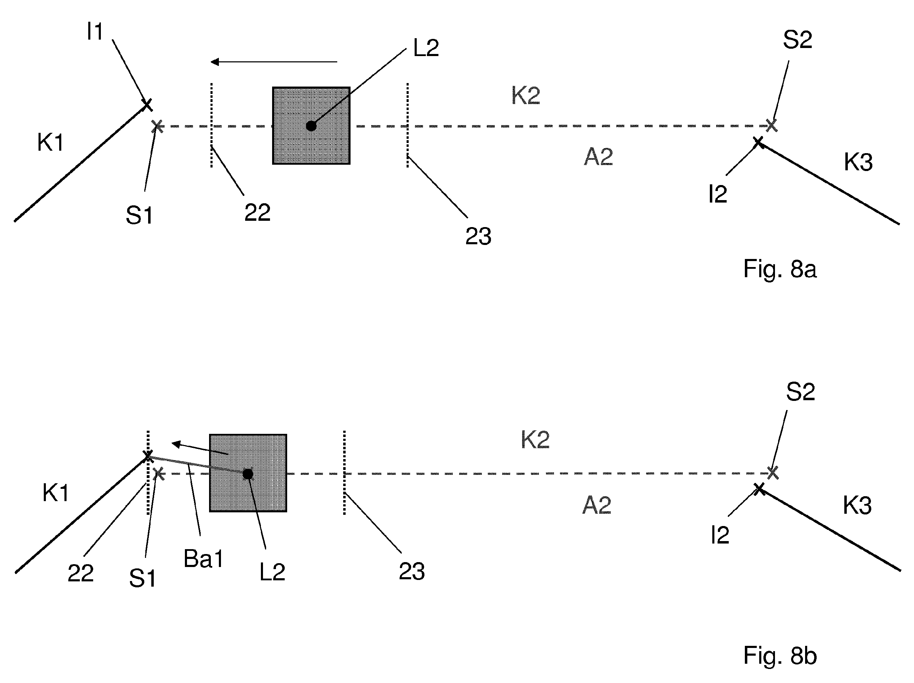

Die Fig. 8a - h zeigen im Einzelnen die Schritte zur Herstellung eines zweiten Konturteilschnitts K2. Der in den Fig. 8a - h gezeigte zweite Laserschneidkopf L2 ist mit einem ersten Lichtschnittsensor 22 und einem zweiten Lichtschnittsensor 23 versehen, welche gegenüberliegend angeordnet sind. Ein durch ein Schneidprogramm vorgegebener erster Soll-Endpunkt des zweiten Konturteilschnitts K2 ist mit dem Bezugszeichen S1 und ein zweiter Soll-Endpunkt mit dem Bezugszeichen S2 bezeichnet. Ein Ist-Endpunkt des ersten Konturteilschnitts K1 ist mit dem Bezugszeichen I1 und ein zweiter Ist-Endpunkt des dritten Konturteilschnitts mit dem Bezugszeichen 12 bezeichnet.

Bei dem in Fig. 8a gezeigten ersten Schritt haben der erste K1 und der dritte Konturteilschnitt K3 den zweiten Arbeitsbereich A2 erreicht. Der zweite Laserschneidkopf L2 bewegt sich gemäß einer durch das Schneidprogramm vorgegebenen Bahn in Richtung des ersten Soll-Endpunkts S1.

Bei dem in Fig. 8b gezeigten zweiten Schritt wird mittels des ersten Lichtschnittsensors 22 der erste Ist-Endpunkt I1 erfasst. Es wird sodann mit dem Schneidprogramm eine erste korrigierte Bahn Ba1 berechnet, welche zum ersten Ist-Endpunkt I1 führt.

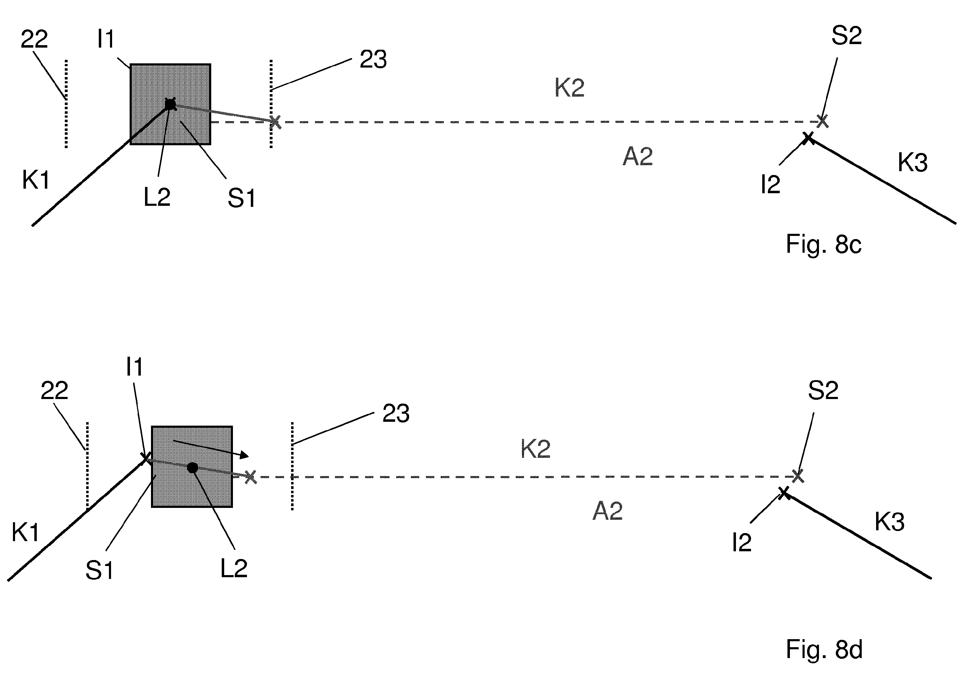

Bei dem in Fig. 8c gezeigten dritten Schritt ist der zweite Laserschneidkopf L2 in Übereinstimmung mit dem ersten Ist-Endpunkt I1. Es wird eine zweite korrigierte Bahn Ba2 berechnet, deren Endpunkt auf der durch das Schneidprogramm vorgegebenen Bahn des zweiten Konturteilschnitts K2 liegt.

Bei dem in Fig. 8d gezeigten vierten Schritt wird nunmehr mittels des zweiten Laserschneidkopfs L2 ausgehend vom ersten Ist-Endpunkt I1 entlang der zweiten korrigierten Bahn Ba2 der zweite Konturteilschnitt K2 begonnen. Der zweite Laserschneidkopf L2 wird in Richtung des zweiten Soll-Endpunkts S2 zunächst entlang der zweiten korrigierten Bahn Ba2 geführt.

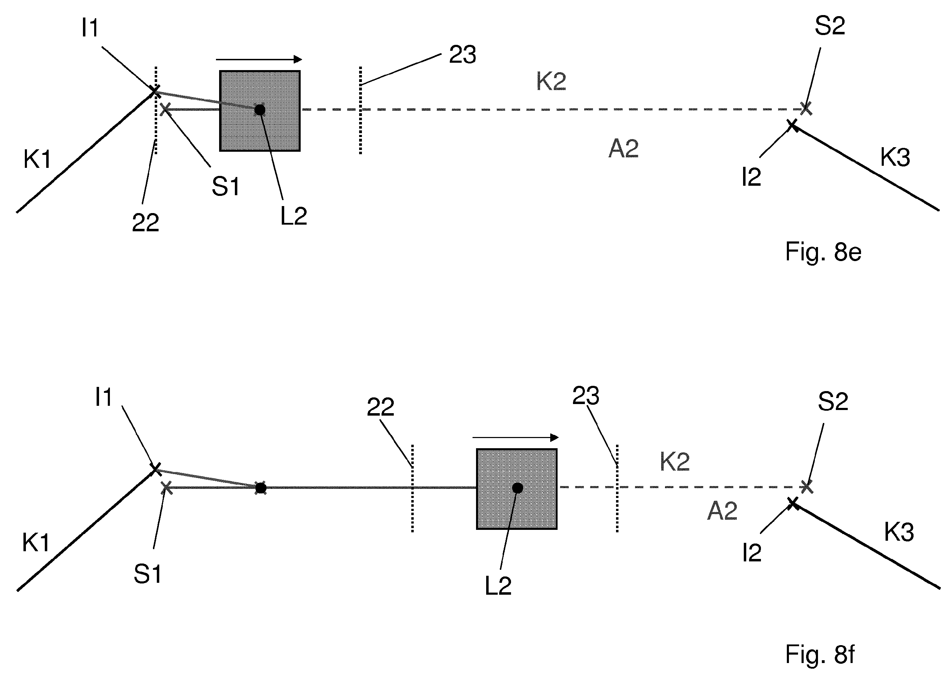

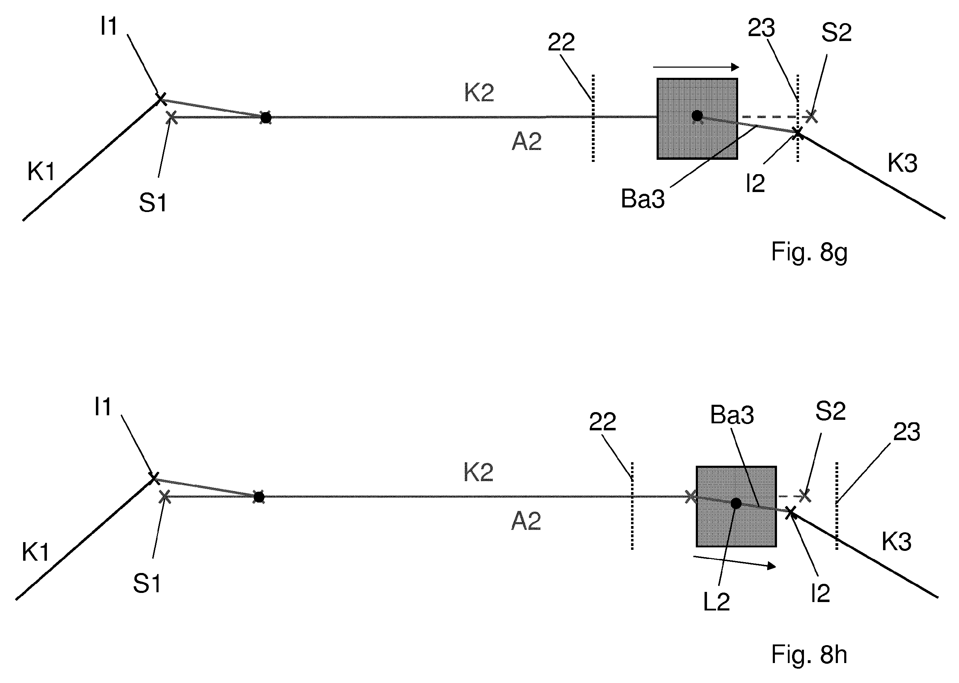

Bei dem in Fig. 8e gezeigten fünften Schritt hat der mit dem zweiten Laserschneidkopf L2 erzeugte zweite Laserstrahl die durch das Schneidprogramm vorgegebene Bahn für die zweite Kontur K2 erreicht. Der zweite Laserschneidkopf L2 wird fortan entlang der für zweiten Konturteilschnitt K2 vorgegebenen Bahn bewegt bis mittels des zweiten Lichtschnittsensors 23 der zweite Ist-Endpunkt I2 des dritten Konturteilschnitts K3 erfasst wird (siehe Fig. 8f, 8g). In diesem Moment wird mittels des Steuerprogramms eine dritte korrigierte Bahn Ba3 berechnet, welche zum zweiten Ist-Endpunkt I2 führt.

Der zweite Laserschneidkopf L2 wird nunmehr auf der dritten korrigierten Bahn Ba3 zum zweiten Ist-Endpunkt I2 geführt (siehe Fig. 8h).

Mit dem vorgeschlagenen Verfahren wird sichergestellt, dass der erste Konturteilschnitt K1 und der dritte Konturteilschnitt K3 sicher und zuverlässig mittels des zweiten Konturteilschnitts K2 verbunden werden.

### Bezugszeichenliste

- 1: Haspel
- 2: Blechband
- 3: Spule
- 4: Walzenrichtmaschine
- 5: Laserschneidvorrichtung
- 6: Platine
- 7: Reststück
- 8: erster Roboter
- 9: zweiter Roboter
- 10: erste Presse
- 11: zweite Presse
- 12: dritte Presse
- 13: Blechformteil
- 14: dritter Roboter
- 15: vierter Roboter
- 16: fünfter Roboter
- 17: Ofen
- 18: Prüfeinrichtung
- 19: erste Kamera
- 20: zweite Kamera
- 21: dritte Kamera
- 22: erster Lichtschnittsensor
- 23: zweiter Lichtschnittsensor

- A1: erster Arbeitsbereich
- A2: zweiter Arbeitsbereich
- A3: dritter Arbeitsbereich
- B1: erster Übergabebereich
- B2: zweiter Übergabebereich
- B3: dritter Übergabebereich
- B4: vierter Übergabebereich
- Ba1: erste korrigierte Bahn
- Ba2: zweite korrigierte Bahn
- Ba3: dritte korrigierte Bahn
- E1: erster Endpunkt
- E1': vorheriger erster Endpunkt
- E2: zweiter Endpunkt
- E2': vorheriger zweiter Endpunkt
- E3: dritter Endpunkt
- E3': vorheriger dritter Endpunkt
- E4: vierter Endpunkt
- E4': vorheriger vierter Endpunkt
- Ea: Endabschnitt
- I1: erster Ist-Endpunkt
- I2: zweiter Ist-Endpunkt
- K: Kontur
- K1: erster Konturteilschnitt
- K1': vorheriger erste Konturteilschnitt
- K2: zweiter Konturteilschnitt
- K2': vorheriger zweiter Konturteilschnitt
- K3: dritter Konturteilschnitt
- K3': vorheriger dritter Konturteilschnitt
- K4': vorheriger vierter Konturteilschnitt
- L1: erster Laserschneidkopf
- L2: zweiter Laserschneidkopf
- L3: dritter Laserschneidkopf
- M: Mittellinie
- S1: erster Soll-Endpunkt
- S2: zweiter Soll-Endpunkt
- U1: erste Überschneidung
- U2: zweite Überschneidung
- x: Transportrichtung

## Patentansprüche

1. Verfahren zur Herstellung eines Blechformteils (13) **gekennzeichnet durch** folgende Schritte :
kontinuierliches Zuführen eines von einer Spule (3) abgewickelten Blechbands (2) zu einer Strahlschneidvorrichtung (5);
mitlaufendes Schneiden einer Platine (6) aus dem mit einer konstanten Geschwindigkeit bewegten Blechband (2) mittels der Strahlschneidvorrichtung (5), wobei eine Dauer zur Herstellung der Platine (6) einen Takt definiert;
Aufnehmen der Platine (6) mittels einer im Takt arbeitenden ersten Umsetzeinrichtung (8);
Weitergabe der Platine (6) mittels der ersten Umsetzeinrichtung (8) an eine im Takt arbeitende Umformeinrichtung (10, 11, 12, 14, 15); und
Umformen der Platine (6) zum Blechformteil (13) mittels der Umformeinrichtung (10, 11, 12, 14, 15).

2. Verfahren nach Anspruch 1, wobei mittels einer zweiten Umsetzeinrichtung (9) zumindest ein durch das Schneiden der Platine (6) gebildetes Reststück (7) aufgenommen und auf einen ersten Stapelplatz gesetzt wird.

3. Verfahren nach einem der vorhergehenden Ansprüche, wobei die Platine (6) mittels der ersten Umsetzeinrichtung (8) in eine Umformvorrichtung (10, 11, 12) der Umformeinrichtung oder auf einen Übergabeplatz gesetzt wird.

4. Verfahren nach Anspruch 3, wobei die Platine (6) mittels einer im Takt arbeitenden dritten Umsetzeinrichtung (14) vom Übergabeplatz aufgenommen und in eine Umformvorrichtung (10, 11, 12) der Umformeinrichtung (10, 11, 12, 14, 15) gesetzt wird.

5. Verfahren nach einem der vorhergehenden Ansprüche, wobei die Platine (6) im Falle einer Störung der Umformeinrichtung (10, 11, 12, 14, 15) mittels der ersten Umsetzeinrichtung (8) auf einen zweiten Stapelplatz gesetzt wird.

6. Verfahren nach einem der vorhergehenden Ansprüche, wobei die Platine (6) im Falle einer Störung der Strahlschneidvorrichtung (5) mittels der ersten (8) oder dritten Umsetzeinrichtung (14) vom zweiten Stapelplatz aufgenommen und an die Umformeinrichtung (10, 11, 12, 14, 15) weitergegeben wird.

7. Verfahren nach Anspruch 1, wobei die Platine (6) mittels der ersten Umsetzeinrichtung (8) an eine Transportvorrichtung zum Transport durch einen Ofen (17) übergeben wird.

8. Verfahren nach einem der vorhergehenden Ansprüche, wobei als Strahlschneidvorrichtung (5) eine Laserschneidvorrichtung mit zumindest einem in xy-Richtung bewegbaren Laserschneidkopf verwendet wird.

9. Verfahren nach einem der vorhergehenden Ansprüche, wobei als Umformvorrichtung (10, 11, 12) zumindest eine Presse, zumindest eine Warmformpresse oder eine Hydroformvorrichtung verwendet wird.

10. Vorrichtung zur Herstellung eines Blechformteils (13), **gekennzeichnet durch** folgenden Merkmale :
eine Zuführvorrichtung (4) zum kontinuierlichen Zuführen eines von einer Spule (3) abgewickelten Blechbands (2) zu einer Strahlschneidvorrichtung (5);
eine Strahlschneidvorrichtung (5) zum Schneiden einer Platine (6) aus dem mit einer konstanten Geschwindigkeit bewegten Blechband (2), wobei eine Dauer zur Herstellung der Platine (6) einen Takt definiert;
eine im Takt arbeitende erste Umsetzeinrichtung (8) zum Aufnehmen und Weitergeben der Platine (6) an eine im Takt arbeitende Umformeinrichtung (10, 11, 12, 14, 15); und
eine im Takt arbeitende Umformeinrichtung (10, 11, 12, 14, 15) zum Umformen der Platine (6) zum Blechformteil.

11. Vorrichtung nach Anspruch 10, wobei die Zuführvorrichtung eine Walzenrichtmaschine (4) umfasst.

12. Vorrichtung nach einem der Ansprüche 10 oder 11, wobei eine zweite Umsetzeinrichtung (9) zum Aufnehmen eines durch das Schneiden der Platine (6) gebildeten Reststücks (7) und zum Setzen des Reststücks (7) auf einen ersten Stapelplatz vorgesehen ist.

13. Vorrichtung nach einem der Ansprüche 10 bis 12, wobei die Platine (6) mittels der ersten Umsetzeinrichtung (8) in eine Umformvorrichtung (10, 11, 12) der Umformeinrichtung (10, 11, 12, 14, 15) oder auf einen Übergabeplatz setzbar ist.

14. Vorrichtung nach Anspruch 13, wobei eine im Takt arbeitende dritte Umsetzeinrichtung (14) zum Aufnehmen der Platine (6) vom Übergabeplatz und zum Setzen in eine Umformvorrichtung (10, 11, 12, 14, 15) der Umformeinrichtung (10, 11, 12) vorgesehen ist.

15. Vorrichtung nach einem der Ansprüche 10 bis 14, wobei eine Steuerung vorgesehen ist, so dass die Platine (6) im Falle einer Störung der Umformeinrichtung (10, 11, 12) mittels der ersten Umsetzeinrichtung (8) auf einen zweiten Stapelplatz gesetzt wird.

16. Vorrichtung nach einem der Ansprüche 11 bis 15, wobei die Steuerung so ausgestaltet ist, dass die Platine (6) im Falle einer Störung der Strahlschneidvorrichtung (5) mittels der ersten (8) oder dritten Umsetzeinrichtung (14) vom zweiten Stapelplatz aufgenommen und an die Umformeinrichtung (10, 11, 12, 14, 15) weitergegeben wird.

17. Vorrichtung nach einem der Ansprüche 10 bis 16, wobei ein Ofen (17) und eine Transportvorrichtung zum Transport der Platine (6) in den Ofen(17) vorgesehen sind.

18. Vorrichtung nach einem der Ansprüche 10 bis 17, wobei die Strahlschneidvorrichtung (5) eine Laserschneidvorrichtung mit zumindest einem in xy-Richtung bewegbaren Laserschneidkopf umfasst.

## Claims

1. A method for producing a shaped sheet metal (13) part **characterized by** the following steps:
continuous feeding of a sheet metal band (2) unwound from a coil (3) to a jet cutter (5);
moving cutting, by means of the jet cutter (5), of a blank (6) out of the sheet metal band (2) moving at a constant speed, the time required to produce the blank (6) defining a cycle;
picking up the blank (6) by means of a first transfer device (8) operating in time with the cycle;
transferring the blank (6) by means of a first transfer device (8) to a shaping system (10, 11, 12, 14, 15) operating in time with the cycle; and
shaping the blank (6) into a shaped sheet metal part (13) by means of the shaping system (10, 11, 12, 14, 15).

2. The method described in claim 1, wherein a second transfer device (9) picks up at least one scrap piece (7) shaped by cutting the blank (6) and sets it on a first stacking place.

3. The method described in one of the preceding claims, wherein the blank (6) is set, by the first transfer device (8), into a shaping device (10, 11, 12) of the shaping system, or onto a transfer place.

4. The method described in claim 3, wherein the blank (6) is picked up from the transfer place by means of a third transfer device (14) working in time with the cycle and set into a shaping device (10, 11, 12) of the shaping system (10, 11, 12, 14,15).

5. The method described in one of the preceding claims, wherein if the shaping system (10, 11, 12, 14, 15) malfunctions the blank (6) is set, by the first transfer device (8), onto a second stacking place.

6. The method described in one of the preceding claims, wherein if the jet cutter (5) malfunctions, the blank (6) is picked up, by the first (8) or third (14) transfer device, from the second stacking place and transferred to the shaping system (10, 11, 12, 14, 15).

7. The method described in claim 1, wherein the blank (6) is transferred, by the first transfer device (8), to a transport device for transport through a furnace (17).

8. The method described in one of the preceding claims, wherein the jet cutter (5) that is used is a laser cutter with at least one laser cutting head that can be moved in the xy direction.

9. The method described in one of the preceding claims, wherein at least one press, at least one hot shaping press, or a hydroforming device is used as a shaping device (10, 11, 12).

10. A device to produce a shaped sheet metal part (13), comprising:
a feeding device (4) for continuous feeding a sheet metal band (2) unwound from a coil (3) to a jet cutter (5);
a jet cutter (5) to cut a blank (6) out of the sheet metal band (2) moving at a constant speed, the time required to produce the blank (6) defining a cycle;
a first transfer device (8) working in time with the cycle to pick up the blank (6) and transfer it to a shaping system (10, 11, 12, 14, 15) working in time with the cycle; and
a shaping system (10, 11, 12, 14, 15) working in time with the cycle to shape the blank (6) into the shaped sheet metal part.

11. The device described in claim 10, wherein the feeding device comprises a roller straightening machine (4).

12. The device described in one of claims 10 or 11, wherein a second transfer device (9) is provided to pick up a scrap piece (7) formed by cutting the blank (6) and to set the scrap piece (7) on a first stacking place.

13. The device described in one of claims 10 through 12, wherein the blank (6) can be set, by the first transfer device (8), into a shaping device (10, 11, 12) of the shaping system (10, 11, 12, 14, 15), or onto a transfer place.

14. The device described in claim 13, wherein a third transfer device (14) working in time with the cycle is provided to pick up the blank (6) from the transfer place and set it into a shaping device (10, 11, 12, 14, 15) of the shaping system (10, 11, 12).

15. The device described in one of claims 10 through 14, wherein a controller is provided, so that if the shaping system (10, 11, 12) malfunctions the blank (6) is set, by the first transfer device (8), onto a second stacking place.

16. The device described in one of claims 11 through 15, wherein the controller is designed so that if the jet cutter (5) malfunctions, the blank (6) is picked up, by the first (8) or third (14) transfer device, from the second stacking place and transferred to the shaping system (10, 11, 12, 14, 15).

17. The device described in one of claims 10 through 16, wherein a furnace (17) and a transport device to transport the blank (6) into the furnace (17) are provided.

18. The device described in one of claims 10 through 17, wherein the jet cutter (5) comprises a laser cutter with at least one laser cutting head that can be moved in the xy direction.

## Revendications

1. Procédé permettant de produire une pièce formée en tôle (13) **caractérisé par** les étapes suivantes:
amenée en continu d'un feuillard (2) déroulé d'une bobine (3) à un dispositif de découpage au jet (5);
découpe rotative d'une ébauche (6) à partir du feuillard (2) déplacé à une vitesse constante au moyen du dispositif de découpage au jet (5); une durée de fabrication de l'ébauche (6) définissant une cadence;
réception de l'ébauche (6) au moyen d'un premier dispositif de déplacement (8) fonctionnant en cadence;
transfert de l'ébauche (6) au moyen du premier dispositif de déplacement (8) sur un dispositif de formage (10, 11, 12, 14, 15) fonctionnant en cadence; et
formage de l'ébauche (6) au moyen du dispositif de formage (10, 11, 12, 14, 15) pour obtenir la pièce formée en tôle (13).

2. Procédé selon la revendication 1, en ce qu'au moyen d'un deuxième dispositif de déplacement (9) au moins une pièce restante (7) formée par la découpe de l'ébauche (6) est reçue et chargée sur un premier poste d'empilage.

3. Procédé selon l'une des revendications précédentes, en ce que l'ébauche (6) est chargée dans un équipement de formage (10, 11, 12) du dispositif de formage ou sur un poste de transfert au moyen du premier dispositif de déplacement (8).

4. Procédé selon la revendication 3, en ce que l'ébauche (6) est reçue par le poste de transfert au moyen du troisième dispositif de déplacement (14) fonctionnant en cadence et chargée dans un équipement de formage (10, 11 ,12) du dispositif de formage (10, 11, 12, 14, 15).

5. Procédé selon l'une des revendications précédentes, en ce que l'ébauche (6) dans le cas d'un défaut du dispositif de formage (10, 11, 12, 14, 15) est chargée sur un deuxième poste d'empilage au moyen du premier dispositif de déplacement (8).

6. Procédé selon l'une des revendications précédentes, en ce que l'ébauche (6) dans le cas d'un défaut du dispositif de découpage au jet (5) est reçue par le deuxième poste d'empilage au moyen du premier (8) ou du troisième dispositif de déplacement (14) et transférée sur le dispositif de formage (10, 11, 12, 14, 15).

7. Procédé selon la revendication 1, en ce que l'ébauche (6) est transférée au moyen du premier dispositif de déplacement (8) sur un dispositif de transport pour le transport à travers un four (17).

8. Procédé selon l'une des revendications précédentes, en ce qu'un dispositif de découpe laser avec au moins une tête de coupe laser pouvant se déplacer dans un sens xy est utilisé comme dispositif de découpage au jet (5).

9. Procédé selon l'une des revendications précédentes, en ce qu'au moins une presse, au moins une presse de thermoformage ou un dispositif d'hydroformage est utilisée comme équipement de formage (10, 11, 12).

10. Dispositif permettant de produire une pièce formée en tôle (13) **caractérisé par** les caractéristiques suivantes:
un dispositif d'amenée (4) pour l'amenée en continu d'un feuillard (2) déroulé d'une bobine (3) à un dispositif de découpage au jet (5);
un dispositif de découpage au jet (5) pour la découpe d'une ébauche (6) à partir du feuillard (2) déplacé à une vitesse constante ; une durée de fabrication de l'ébauche (6) définissant une cadence;
un premier dispositif de déplacement (8) fonctionnant en cadence pour la réception et le transfert de l'ébauche (6) sur un dispositif de formage (10, 11, 12, 14, 15) fonctionnant en cadence; et
un dispositif de formage (10, 11, 12, 14, 15) fonctionnant en cadence pour le formage de l'ébauche (6) en une pièce formée en tôle.

11. Dispositif selon la revendication 10, en ce que le dispositif d'amenée comporte une machine redresseuse à rouleaux (4).

12. Dispositif selon l'une des revendications 10 ou 11, en ce qu'un deuxième dispositif de déplacement (9) est prévu pour la réception d'une pièce restante (7) formée par la découpe de l'ébauche (6) et pour le chargement de la pièce restante (7) sur un premier poste d'empilage.

13. Dispositif selon l'une des revendications 10 à 12, en ce que l'ébauche (6) peut être chargée au moyen du premier dispositif de déplacement (8) dans un équipement de formage (10, 11, 12) du dispositif de formage (10, 11, 12, 14, 15) ou sur un poste de transfert.

14. Dispositif selon la revendication 13, en ce qu'un troisième dispositif de déplacement (14) fonctionnant en cadence est prévu pour la réception de l'ébauche (6) du poste de transfert et pour le chargement dans un équipement de formage (10, 11, 12, 14, 15) du dispositif de formage (10, 11, 12).

15. Dispositif selon l'une des revendications 10 à 14, en ce qu'une commande est prévue de manière à ce que l'ébauche (6) dans le cas d'un défaut de l'équipement de formage (10, 11, 12) est chargée sur un deuxième poste d'empilage au moyen du premier dispositif de déplacement (8).

16. Dispositif selon l'une des revendications 11 à 15, en ce que la commande est conçue de sorte que la platine (6) dans le cas d'un défaut du dispositif de découpage au jet (5) soit reçue par le deuxième poste d'empilage au moyen du premier (8) ou du troisième dispositif de déplacement (14) et transférée sur le dispositif de formage (10, 11, 12, 14, 15).

17. Dispositif selon l'une des revendications 10 à 16, en ce qu'un four (17) et un dispositif de transport sont prévus pour le transport de l'ébauche (6) dans le four (17).

18. Dispositif selon l'une des revendications 10 à 17, en ce que le dispositif de découpage au jet (5) comporte un dispositif de découpe laser avec au moins une tête de coupe laser pouvant se déplacer dans le sens xy.
